# EUROPÄISCHE PATENTSCHRIFT

(11) **EP 2 485 886 B1**
(45) Veröffentlichungstag und Bekanntmachung des Hinweises auf die Patenterteilung: **22.01.2014**
(21) Anmeldenummer: 10760954.7
(22) Anmeldetag: 14.09.2010
(51) Int. Cl.: B30B 5/02, B32B 37/10, B32B 39/00, B32B 17/10

(54) **VORRICHTUNG UND VERFAHREN ZUM HERSTELLEN VON VERBUNDSICHERHEITSGLAS**
DEVICE AND PROCESS FOR THE MANUFACTURE OF LAMINATED SAFETY GLASS
DISPOSITIF ET PROCÉDÉ POUR LA FABRICATION D'UN VITRAGE DE SÉCURITÉ STRATIFIÉ

(30) Priorität: 09.10.2009 DE 102009048999
(43) Veröffentlichungstag der Anmeldung: 15.08.2012
(73) Patentinhaber: Fotoverbundglas Marl GmbH, 45772 Marl (DE)
(72) Erfinder: MUSCHIOL, Michael, 45770 Marl (DE)
(74) Vertreter: Kalkoff & Partner
(86) Internationale Anmeldenummer: PCT/EP2010/063470
(87) Internationale Veröffentlichungsnummer: WO 2011/042285

(56) Entgegenhaltungen:
- EP-A1- 2 159 047
- EP-A2- 2 236 287
- WO-A2-2006/128699
- DE-A1- 10 048 974
- DE-A1-102004 030 658
- DE-A1-102008 030 927
- DE-U1-202008 008 799

## Beschreibung

Die Erfindung betrifft eine Vorrichtung und ein Verfahren zum Herstellen von Verbundsicherheitsglas aus mindestens zwei Glasscheiben und einer zwischen den Glasscheiben angeordneten Klebeschicht.

Verbundsicherheitsglas der eingangs genannten Art weist in der Regel zwei Glasscheiben und eine die Glasscheiben verbindende Klebeschicht auf, die vorzugsweise durch eine Folie aus Polyvinylbutyral (PVB) gebildet ist. Derartige Glasscheiben werden beispielsweise im Kraftfahrzeug- oder Baubereich eingesetzt.

Die Herstellung von derartigem Verbundsicherheitsglas mit den hierfür vorgeschriebenen Eigenschaften erfolgt üblicherweise unter Verwendung von Autoklaven, in denen die zu einem Vorverbund zusammengestellten Glasscheiben mit der dazwischen liegenden Klebefolie bei Temperaturen von bis zu 145° C und Drücken von mehr als 10 bar zu der eigentlichen Verbundsicherheitsglasscheibe verpresst werden. Die Verwendung von Autoklaven weist den Nachteil auf, dass diese sowie der eigentliche Herstellungsprozess besonders kostenintensiv und zeitaufwendig und daher insbesondere für kleine Produktionsmengen wirtschaftlich unrentabel ist.

Der Erfindung liegt die Aufgabe zugrunde, eine Vorrichtung sowie ein Verfahren zur Herstellung von Verbundsicherheitsglas bereitzustellen, die die kostengünstige Herstellung von Verbundsicherheitsglas ermöglichen.

Die Erfindung löst die Aufgabe durch eine Vorrichtung mit den Merkmalen des Anspruchs 1 sowie ein Verfahren mit den Merkmalen des Anspruchs 11. Vorteilhafte Weiterbildungen der Erfindung sind in den abhängigen Ansprüchen angegeben.

Erfindungsgemäß weist die Vorrichtung zum Herstellen von Verbundsicherheitsglas eine Grundplatte und eine Abdeckplatte auf, die relativ zueinander zwischen einer Betriebsposition und einer Entnahmeposition verstellbar sind. In der Entnahmeposition, in der die Grundplatte mindestens von einer Seite, vorzugsweise von drei Seiten frei zugänglich ist, besteht für den Bediener der Vorrichtung die Möglichkeit, einen Vorverbund, gebildet aus zwei Glasscheiben und einer zwischen den Glasscheiben angeordneten Klebeschicht, vorzugsweise einer PVB-Folie, in komfortabler Weise auf der Grundplatte zu positionieren. Gleichzeitig bietet die Entnahmeposition dem Bediener ferner die Möglichkeit, das in der Vorrichtung hergestellte Verbundsicherheitsglas nach Beendigung des Herstellungsprozesses im Wesentlichen ungehindert aus der Vorrichtung zu entnehmen.

In der Betriebsposition der Vorrichtung bildet die Grundplatte mit der Abdeckplatte in Verbindung mit einem zwischen den Platten druckdicht angeordneten und diese beabstandenden Dichtungsrahmen einen luft- bzw. druckdicht abgeschlossenen Arbeitsraum. Zur Verstellung der Vorrichtung zwischen der Entnahmeposition und der Betriebsposition sind die Grundplatte und die Abdeckplatte insbesondere aufeinander zu bewegbar.

Die erfindungsgemäße Vorrichtung weist ferner Mittel zum Herstellen eines Unterdruckes sowie Mittel zur Erzeugung eines Überdruckes, jeweils in der Betriebsposition, auf. Mit den Mitteln zum Herstellen eines Unterdruckes wird in einem zwischen der Grundplatte und einem den Vorverbund überdeckenden flexiblen Hüllmaterial gebildeten Hohlraum ein Unterdruck erzeugt. Die Mittel zur Erzeugung des Überdruckes dienen erfindungsgemäß zur Herstellung eines über dem Atmosphärendruck liegenden Luftdruckes in dem Arbeitsraum zwischen der Abdeckplatte und dem auf den Glasscheiben angeordneten Hüllmaterial. Aufgrund der flexiblen Ausgestaltung des Hüllmaterials und unterstützt durch den Unterdruck im Hohlraum wirkt der Überdruck im Arbeitsraum gleichmäßig auf den Vorverbund und presst die Glasscheiben aneinander.

Für die Herstellung des Verbundsicherheitsglases ist neben der Anpressung der Glasscheiben aneinander die Einstellung einer von der verwendeten Klebeschicht abhängigen Prozesstemperatur erforderlich. In der Betriebsposition dienen hierzu Heizmittel, die vor, während und/oder nach der Erzeugung des Unterdruckes im Hohlraum und Überdruckes im Arbeitsraum den Vorverbund auf die erforderliche Temperatur erhitzen und diese Temperatur über einen festgelegten Zeitraum aufrecht erhalten.

Die erfindungsgemäße Vorrichtung zeichnet sich durch ihren einfachen Aufbau und aufgrund des flexiblen Hüllmaterials sowie der Möglichkeit der Verwendung von Dichtungsrahmen mit variablen, an die Größe des Vorverbundes angepassten Abmessungen, einfache Einstellung effizienter Rahmenbedingung zur rentablen Herstellung aus.

Das Zusammenwirken des Unterdrucks im Hohlraum mit dem Überdruck im Arbeitsraum, welcher aufgrund der flexiblen Ausgestaltung des Hüllmaterials auf den Vorverbund wirkt, gewährleistet in besonders zuverlässiger Weise, dass vorhandene Luftbläschen oder Feuchtigkeit, welche sich insbesondere aufgrund der Absorptionseigenschaften von PVB-Folien zwischen den Glasscheiben niederschlagen kann, aus dem Bereich zwischen den Glasscheiben entfernt wird. Der Überdruck im Arbeitsraum gewährleistet überdies im Gegensatz zur mechanischen Druckbeaufschlagung einen besonders gleichmäßigen Andruck der Glasscheiben aneinander. Die erfindungsgemäße Vorrichtung gewährleistet in besonderem Maße die zuverlässige und rentable Herstellung von Verbundsicherheitsglas.

In ergänzender Weise kostenreduzierend für die Herstellung des Verbundsicherheitsglases wirkt sich die vorteilhafterweise vorgesehene Verwendung einer Silikonkautschukmatte als Hüllmaterial aus, die separat in die Vorrichtung einlegbar, aber auch speicherbar bspw. auf einer Speicherrolle an der Vorrichtung angeordnet werden kann. Diese ist mehrfach wiederverwendbar und lässt sich in besonders einfacher Weise über dem Vorverbund platzieren. Darüber hinaus gewährleistet sie, insbesondere im Falle eines umlaufenden Andrucks an die Grundplatte mittels des Dichtungsrahmens einen abgedichteten Hohlraum, welcher zur Erzeugung des Unterdrucks evakuiert werden kann. Vorzugweise weist die Silikonkautschukmatte hierzu einen an dieser angebildeten Anschluss für eine Saugleitung auf.

Der erfindungsgemäß vorgesehene Dichtungsrahmen erfüllt in erster Linie die Funktion zur Herstellung eines luftdichten Arbeitsraumes im Bereich zwischen den Platten. Zusätzlich kann er im Falle der zuvor geschilderten Ausgestaltung, der Verwendung einer Silikonkautschukmatte als Hüllmaterial, dazu genutzt werden, um diese umlaufend an der Abdeckplatte anzupressen, um so ebenfalls besonders zuverlässig einen luftdichten Hohlraum zwischen dem Hüllmaterial und der Grundplatte zu bilden. Dabei dient das Hüllmaterial zudem als den Arbeitsraum gegenüber der Umgebung abdichtendes Dichtelement.

Der Dichtungsrahmen kann grundsätzlich beliebig ausgebildet sein, sofern er nicht die Abmessungen der Grund- und Abdeckplatte überschreitet. So besteht die Möglichkeit der Verwendung unterschiedlicher Dichtungsrahmen in Abhängigkeit von der Größe der herzustellenden Verbundsicherheitsgläser, wobei die Dichtungsrahmen von Fall zu Fall lediglich in die Vorrichtung eingelegt werden. Alternativ ist auch die einstückige Ausbildung der Grundplatte oder Abdeckplatte mit dem Dichtungsrahmen möglich, wobei dann der Dichtungsrahmen nach Art eines umlaufenden Stegs von einer der Platten, vorzugsweise der Abdeckplatte vorsteht. Nach einer besonders vorteilhaften Ausgestaltung der Erfindung ist der Dichtungsrahmen jedoch lösbar mit der Grund- oder Abdeckplatte verbunden. Die lösbare Verbindbarkeit kombiniert die Vorteile eines einstückig mit der Grund-oder Abdeckplatte verbundenen Dichtungsrahmens mit den Vorteilen der Verwendung von Dichtungsrahmen mit variabler Größe. Die lösbare Verbindbarkeit gewährleistet dabei ferner, dass der eingesetzte Rahmen positionsgenau in der Vorrichtung angeordnet und arretiert ist. Die Verwendung von in der Größe an die herzustellenden Verbundsicherheitsgläser angepasster Dichtungsrahmen ermöglicht die Bildung solcher Hohl- bzw. Arbeitsräume, in denen besonders kurzfristig die erforderlichen Prozessbedingungen, wie Druck und Temperatur hergestellt werden können.

Erfindungsgemäß weist die Vorrichtung Mittel zum Herstellen eines Unterdruckes im Hohlraum sowie eines Überdruckes im Arbeitsraum auf. Im Falle der vorteilhafterweise vorgesehenen Verwendung einer Silikonkautschukmatte als Hüllmaterial bildet mindestens eine an diese druckdicht angeschlossene Leitung ein derartiges Mittel, die anderenends zur Erzeugung des Unterdrucks mit einer vorteilhafterweise vorgesehenen Vakuumeinheit verbunden werden kann. Mittel zur Erzeugung eines Überdruckes können bspw. durch in den Arbeitsraum hineinreichende Druckleitungen gebildet werden.

Das Herausführen der Anschlussleitungen aus der Vorrichtung kann grundsätzlich in beliebiger Weise erfolgen, wobei bspw. außenseitig an der Abdeckplatte und/oder Grundplatte angeordnete Anschlüsse denkbar sind. Nach einer besonders vorteilhaften Ausgestaltung der Erfindung weist jedoch der Dichtungsrahmen Leitungsdurchführungen zum Anschluss von Leitungen einer Vakuum- und/oder Druckeinheit auf. Gemäß dieser Ausführungsform der Erfindung sind in der Betriebsposition außenseitig am Dichtungsrahmen Anschlüsse angeordnet, welche innerhalb der Vorrichtung in den Arbeitsraum und/oder Hohlraum führen. Die Anordnung der Leitungsdurchführung in dem Dichtungsrahmen zeichnet sich dabei insbesondere dadurch aus, dass diese in der Betriebsposition von außen gut zugänglich sind und so den Anschluss der vorzugsweise vorzusehenden Vakuum-und/oder Druckeinheiten in komfortabler Weise ermöglichen. Denkbar ist auch die Kombination der Vakuum- und/oder Druckeinheit in einer Pumpeneinheit, welche in Abhängigkeit von dem einzustellenden Betriebszustand in bekannter Weise geschaltet werden kann.

Wesentlich für die Funktionsweise der erfindungsgemäßen Vorrichtung ist die Bildung eines über die Prozessdauer druckdichten Arbeitsraumes im Bereich zwischen der Abdeckplatte und der Grundplatte. Eine zuverlässige Anordnung kann grundsätzlich bereits über geeignete Mittel zur Verstellbarkeit der Grundplatte relativ gegenüber der Abdeckplatte erreicht werden, wobei durch die gewählten Verstellmittel eine Positionssicherung der Grundplatte gegenüber der Abdeckplatte realisierbar ist. Gemäß einer vorteilhaften Weiterbildung der Erfindung ist jedoch vorgesehen, dass die Grund- und Abdeckplatte in der Betriebsposition verriegelbar sind. Durch die Verriegelbarkeit, bspw. eine mechanische Verriegelung mit entsprechenden Verschlusselementen, wird in besonders zuverlässiger Weise gewährleistet, dass die Grundplatte und die Abdeckplatte in der Betriebsposition relativ zueinander festgelegt sind. Die Ausgestaltung der Verriegelung ist dabei grundsätzlich frei wählbar, wobei neben mechanischen auch hydraulisch oder elektrisch wirkende Verriegelungsmittel verwendbar sind.

Die Ausgestaltung der erfindungsgemäß vorgesehenen Heizmittel zum Erhitzen der zu verbindenden Glasscheiben ist ebenfalls grundsätzlich frei wählbar. Denkbar sind bspw. meanderförmig an der Abdeck- und/oder Grundplatte verlaufende elektrische Heizleitungen, welche eine oder beide Platten aufheizen. Nach einer vorteilhaften Weiterbildung der Erfindung ist jedoch vorgesehen, dass die Heizeinheit durch in der Grund- und/oder Abdeckplatte verlaufende Rohrleitungen gebildet ist. Die Rohrleitungen dienen dabei zur Aufnahme bzw. Durchleitung eines fluiden Heizmediums wie bspw. Wasser, welches durch die Rohrleitungen geleitet wird. Die Verwendung von Rohrleitungen zeichnet sich dabei dadurch aus, dass über die Strömungsgeschwindigkeit des durchzuleitenden fluiden Mediums der Wärmeübergang variiert werden kann. Zum schnelleren Wärmeübergang ist bspw. die Wassermenge äußerst gering gehalten, um hohe Strömungsgeschwindigkeiten zu erreichen. Darüber hinaus lassen sich die Rohrleitungen in der Abdeck- und/oder Grundplatte ferner zur beschleunigten bzw. kontrollierten Abkühlung im Anschluss an den Herstellungsprozess verwenden, wobei dann das heiße fluide Medium durch ein kaltes, bspw. Wasser ersetzt wird. Eine Verkürzung der Abkühlphase steigert die Rentabilität der Vorrichtung in ergänzender Weise.

Besonders vorteilhafterweise ist zur Effizienzsteigerung vorgesehen, dass sowohl die Grund- als auch die Abdeckplatte mit den vorteilhafterweise vorgesehenen Rohrleitungen versehen sind. Ebenfalls zur Effizienzsteigerung dient eine vorteilhafterweise vorzusehende Wärmedämmung, welche vorzugsweise außenseitig an der Grund- und/oder Abdeckplatte angeordnet ist. Darüber hinaus dient die Wärmedämmung zur Steigerung der Sicherheit bei der Bedienung der Vorrichtung, nachdem durch diese eine Aufheizung bedienerseits zugänglicher Bauteile der Vorrichtung wirksam verhindert wird.

Die relative Verstellbarkeit der Grundplatte gegenüber der Abdeckplatte kann in beliebiger Weise ausgestaltet sein. Besonders vorteilhafterweise ist jedoch die Grundplatte längsverschiebbar und in Richtung auf die Abdeckplatte verstellbar. Diese Ausgestaltung der Erfindung ermöglicht durch die Längsverschiebbarkeit, wobei die Grundplatte bspw. auf Schienen aus der Vorrichtung herausgezogen werden kann, eine einfache Zugänglichkeit der Grundplatte und somit eine einfache Anordnung und Entnahme des Vorverbundes sowie des hergestellten Verbundsicherheitsglases nach Abschluss des Prozesses. Nach der Anordnung des Vorverbundes kann die Grundplatte bspw. nach Art einer Schublade in die Vorrichtung hineingeschoben werden, wo diese anschließend in Richtung auf die Abdeckplatte verstellt wird, um so den abgeschlossenen Arbeitsraum zu bilden.

Die Mittel zur Erzeugung der Verstellung der Grundplatte in Richtung auf die Abdeckplatte können dabei sowohl mechanisch als auch hydraulisch ausgebildet sein. Besonders vorteilhafterweise werden die Mittel jedoch durch pneumatische Balgzylinder gebildet, durch die die Grundplatte in Richtung auf die Abdeckplatte verstellbar ist. Die Verwendung pneumatischer Balgzylinder zeichnet sich dabei dadurch aus, dass diese die Grundplatte besonders gleichmäßig in Richtung auf die Abdeckplatte verstellen, so dass mit besonders hoher Zuverlässigkeit die Bildung eines Arbeitsraumes gewährleistet ist, welcher gegenüber der Umgebung abgedichtet ist.

Darüber hinaus ermöglicht die Verwendung der pneumatischen Balgzylinder eine einfache Erweiterbarkeit bzw. Anpassbarkeit der Vorrichtung nach Kundenvorgaben. Zur Erweiterung der Anlage ist zur Anpassung an veränderte Plattengrößen lediglich eine Erhöhung der Anzahl der Balgzylinder erforderlich, wobei eine Anpassung bzw. Herstellung der Vorrichtung in beliebigen Längen und Breiten in einfacher Weise möglich ist.

Ebenfalls besonders vorteilhaft für die Möglichkeit der Erweiterung bzw. Herstellung der erfindungsgemäßen Vorrichtung in beliebigen Abmessungen ist die gemäß der Erfindung vorgesehene Ausgestaltung, wonach die Grund- und Abdeckplatte in der Betriebsposition innerhalb eines durch mindestens zwei ringförmige Träger gebildeten Rahmens angeordnet sind. Über die Anzahl der ringförmigen Träger, die hintereinander angeordnet einen Innenraum zur Aufnahme der Abdeck- und Grundplatte bilden, lässt sich die Länge der Vorrichtung in beliebiger Weise einstellen. Darüber hinaus weisen die Träger den Vorteil auf, dass aufgrund der Positionierung der Abdeckplatte und Grundplatte in der Betriebsposition innerhalb der umlaufenden Träger sämtliche Prozesskräfte durch die Träger aufgenommen werden. Die Vorrichtung kann ihrerseits durch lediglich in Abhängigkeit von dem Gewicht der Vorrichtung an den Trägern angeordneten Stützen am Herstellungsort aufgestellt werden. Besonders vorteilhafterweise weist der ringförmige Träger dabei einen T-förmigen Querschnitt auf.

Im Falle der Verwendung der ringförmigen Träger in Verbindung mit den pneumatischen Balgzylindern sind diese ebenfalls innerhalb des durch die ringförmigen Trägern gebildeten Innenraums angeordnet, wodurch in ergänzender Weise gewährleistet wird, dass keine Druckkräfte nach außen geleitet werden.

Sowohl die Verwendung der T-förmigen Träger wie auch die Verwendung der pneumatischen Balgzylinder ermöglicht somit nach Art eines Baukastens die Herstellung der erfindungsgemäßen Vorrichtung in im Wesentlichen frei wählbaren Dimensionierungen. Somit kann diese besonders kostengünstig entsprechend den jeweiligen Kundenwünschen hergestellt werden.

Das erfindungsgemäße Verfahren zur Herstellung von Verbundsicherheitsglas, das unter Verwendung der erfindungsgemäßen Vorrichtung durchgeführt wird, weist die Schritte
- Anordnen der Glasscheiben mit der dazwischen angeordneten Klebeschicht auf einer Grundplatte, wobei als Klebeschicht vorzugsweise eine PVB-Folie verwendet wird,
- Überdecken der Glasscheiben mit einem flexiblen Hüllmaterial, vorzugsweise einer Silikonkautschukmatte und
- Erzeugen eines Unterdruckes in einem Hohlraum zwischen dem Hüllmaterial und der Grundplatte,
- Herstellung eines abgedichteten Arbeitsraumes zwischen der Abdeckplatte und dem auf den Glasscheiben angeordneten Hüllmaterial,
- Erzeugen eines Überdruckes im Arbeitsraum und
- Erhitzen der Glasscheiben mit Klebeschicht und anschließendes Abkühlen
auf.

Das erfindungsgemäße Verfahren zeichnet sich dabei dadurch aus, dass mit besonderer Effizienz und geringen Kosten in zuverlässiger Weise Verbundsicherheitsglas hergestellt werden kann. Nach der Herstellung eines abgedichteten Arbeitsraumes zwischen der Abdeckplatte und dem auf den Glasscheiben angeordneten Hüllmaterial können die Prozesse Herstellen eines Unterdruckes in einem Hohlraum zwischen dem Hüllmaterial und der Grundplatte, Erzeugen eines Überdrucks im Arbeitsraum sowie Erhitzen des Vorverbundes abgestuft oder gleichzeitig erfolgen. Besonders vorteilhafterweise ist jedoch vorgesehen, dass nach der Erzeugung eines Unterdruckes im Hohlraum von vorzugweise -1,0 - -0,5 bar, besonders bevorzugt -0,95 bar der Aufheizprozess beginnt, an deren Ende der Arbeitsraum mit einem Druck von 1,5 - 4 bar, vorzugsweise 2 - 3 bar besonders bevorzugt 1, 4 - 1,8 bar beaufschlagt wird. Die einzustellende Temperatur richtet sich nach der verwendeten Klebeschicht, wobei im Falle der vorzugsweise vorgesehenen Verwendung von PVB-Folien eine Temperatur von 125 - 155° C, vorzugsweise 130 - 140° C, besonders bevorzugt 135° C eingestellt wird.

Nachfolgend werden Ausführungsbeispiele der Erfindung mit Bezug auf die Zeichnungen näher erläutert. In den Zeichnungen zeigen:
- Fig. 1: eine Ansicht eines Schnittes einer ersten Ausführungsform einer Vorrichtung zum Herstellen von Verbundsicherheitsglas in einer Entnahmeposition;
- Fig. 2: eine Ansicht eines Schnittes der Vorrichtung von Fig. 1 in einer Betriebsposition und
- Fig. 3: eine perspektivische Ansicht der erfindungsgemäßen Ausführungsform einer Vorrichtung zum Herstellen von Verbundsicherheitsglas in einer Betriebsposition.

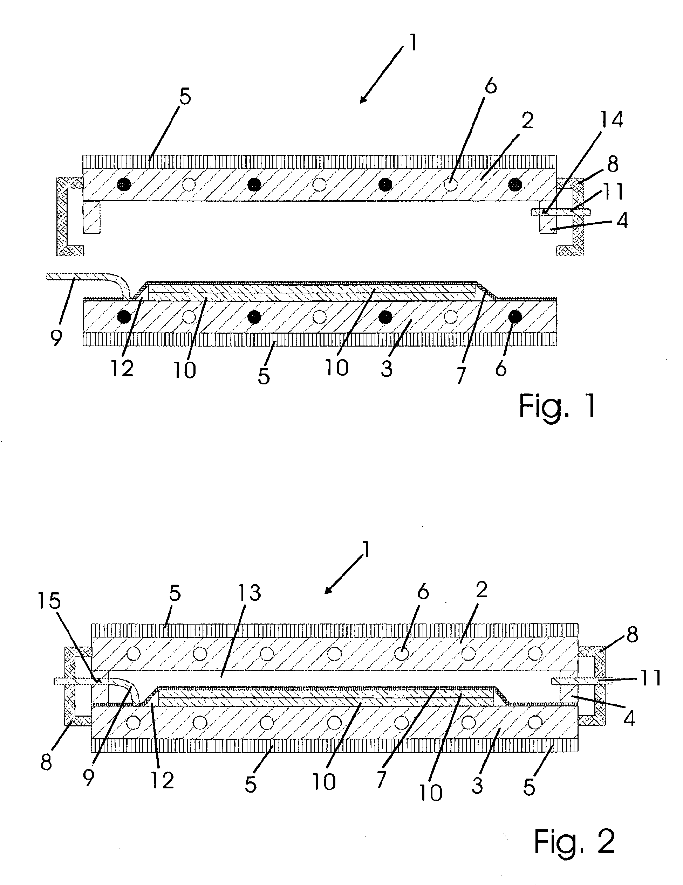

Figur 1 zeigt eine Ansicht eines Schnittes durch eine Vorrichtung 1 zum Herstellen von Verbundsicherheitsglas, wobei die Schnittebene in der Gebrauchslage der Vorrichtung 1 vertikal verläuft.

Die Vorrichtung 1 weist eine Grundplatte 3 sowie eine relativ gegenüber dieser verstellbare Abdeckplatte 2 auf. Die Grundplatte 3 dient zur Aufnahme eines Vorverbundes aus zwei Glasscheiben 10 und einer dazwischen angeordneten Klebeschicht, vorzugsweise einer hier nicht dargestellten PVB-Folie, der innerhalb der Vorrichtung 1 zu einem Verbundsicherheitsglas laminiert wird. In einer in Figur 1 dargestellten Entnahmeposition wird nach der Anordnung des Vorverbundes auf der Grundplatte 3 ein als Silikonkautschukmatte 7 ausgebildetes Hüllmaterial flächig über den Vorverbund ausgebreitet, so dass zwischen der Silikonkautschukmatte 7 und der Grundplatte 3 ein Hohlraum 12 entsteht.

In der in Figur 2 dargestellten Betriebsposition ist die Grundplatte 3 derart gegenüber der Abdeckplatte 2 verstellt, dass ein umlaufend an der Abdeckplatte 2 angeordneter Dichtungsrahmen 4 unter Zwischenschaltung eines Randes der Silikonkautschukmatte 7 an der Grundplatte 3 anliegt. Der Dichtungsrahmen 4 gewährleistet dabei in Verbindung mit der Silikonkautschukmatte 7, dass sowohl der Hohlraum 12, wie auch ein in der Betriebsposition zwischen der Abdeckplatte 2 und der Grundplatte 3 gebildete Arbeitsraum 13 luft- bzw. druckdicht abgeschlossen sind.

In der Betriebsposition dienen Rohrleitungen 9, 11 zur Herstellung eines Unterdruckes im Hohlraum 12 bzw. Überdruckes im Arbeitsraum 13. Zur Herstellung des Unterdruckes ist hierzu die Rohrleitung 9 derart an der Silikonkautschukmatte 7 angeschlossen, dass über diese der Hohlraum 12 evakuiert werden kann. Zum Anschluss einer hier nicht dargestellten Vakuumeinheit ist die Rohrleitung 9 dabei durch eine im Dichtungsrahmen 4 angeordnete Leitungsdurchführung 15 aus der Vorrichtung 1 herausgeführt, so dass die Vakuumeinheit, bspw. über Schnellkupplungen, mit der Rohrleitung 9 in einfacher Weise verbunden werden kann.

Darüber hinaus weist der Dichtungsrahmen 4 eine Leitungsdurchführung 14 für eine Leitung 11 auf, welche zum Anschluss einer hier ebenfalls nicht dargestellten Druckeinheit, bspw. eines Kompressors, ausgebildet ist, über die der Arbeitsraum 13 unter Druck gesetzt werden kann, wobei besonders vorteilhafterweise vorgesehen ist, den Druck im Arbeitsraum so einzustellen, dass der absolute auf den Vorverbund wirkende Druck 2,4 bar beträgt. Der Unterdruck im Hohlraum 12 beträgt vorzugsweise -0,95 bar.

Zur Sicherung des Herstellungsprozesses ist die Position der Abdeckplatte 2 gegenüber der Grundplatte 3 in der Betriebsposition durch Verriegelungsmittel 8 gesichert. Neben der Erzeugung des Unterdruckes im Hohlraum 12 bzw. Überdruckes im Arbeitsraum 13 stellt die einzustellende Prozesstemperatur einen wesentlichen Prozessparameter dar. Zum Erhitzen des Vorverbundes dienen hierzu Rohrleitungen 6, die meanderförmig in der Grundplatte 3 und Abdeckplatte 2 angeordnet sind. Diese Rohrleitungen 6 dienen zur Durchleitung von einem flüssigen Medium, vorzugsweise Wasser, welches in der Heizphase eine der Prozesstemperatur entsprechende Temperatur aufweist und nach der Heizphase durch kaltes Wasser ersetzt werden kann, so dass der Abkühlprozess beschleunigt werden kann.

Zur Prozessoptimierung dienen ferner als Wärmedämmplatten 5 ausgebildete Wärmedämmungen, die außenseitig auf der Grundplatte 3 und Abdeckplatte 2 angeordnet sind und somit zur Effizienzsteigerung beitragen. Darüber hinaus dienen die Dämmplatten 5 dazu, die von außen zugänglichen Teile der Vorrichtung 1 vor einer zu hohen Erwärmung zu schützen, welche bei der Bedienung eine besondere Sorgfalt erforderlich machen würde.

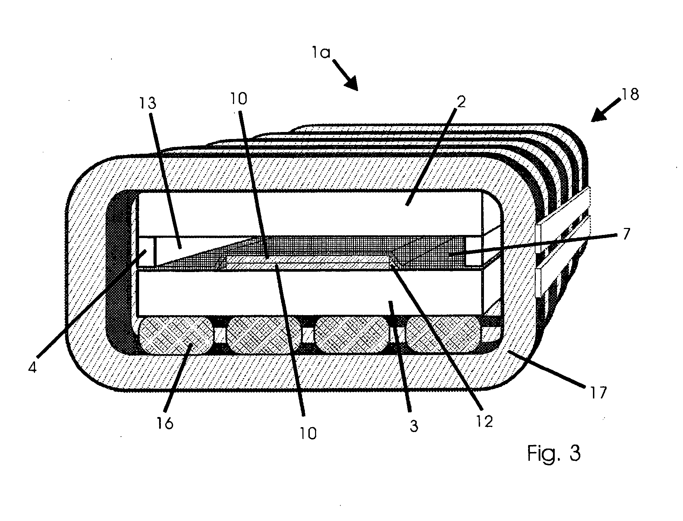

In Figur 3 ist die erfindungsgemäße Ausführungsform einer Vorrichtung 1a zur Herstellung von Verbundsicherheitsglas dargestellt. Gegenüber der in Figur 1 und 2 dargestellten Ausführungsform unterscheidet sich die in Figur 3 dargestellte Ausführungsform dadurch, dass die Grundplatte 3 über pneumatische Balgzylinder 16 in Richtung auf die Abdeckplatte 2 verstellbar ist. Die pneumatischen Balgzylinder 16 zeichnen sich dabei dadurch aus, dass sie einen besonders gleichmäßigen Andruck der Grundplatte 3 an dem Dichtungsrahmen 4 der Abdeckplatte 2 gewährleisten. Darüber hinaus ermöglichen die pneumatischen Balgzylinder 16 in Verbindung mit ringförmigen Trägern 17, die in Längsrichtung der Platten 2, 3 angeordnet sind, eine flexible Gestaltung der Vorrichtung 1a. Der aus den Trägern 17 gebildete Rahmen 18 lässt sich über deren Anzahl in beliebiger Weise erweitern, so dass eine Vorrichtung 1a entsprechend der Kundenwünsche in grundsätzlich beliebiger Länge hergestellt werden kann, wobei hierzu lediglich eine Erhöhung der Anzahl der pneumatischen Balgzylindern 16 sowie der Einsatz entsprechend großer Platten 2, 3 erforderlich ist.

Der aus den Trägern 17 gebildete Rahmen 18 weist darüber hinaus den Vorteil auf, dass außenseitig am Rahmen 18 keinerlei Lasten infolge des Anpressdruckes der Balgzylinder 16 entstehen. Zur Anordnung der Vorrichtung 1a bspw. in einer Produktionshalle ist es lediglich erforderlich, den Rahmen 18 an einem hierfür vorgesehenen Gestell zu befestigen.

Im Übrigen weist die Vorrichtung 1a einen entsprechend der Vorrichtung 1 in den Figuren 1 und 2 dargestellten Aufbau auf, wobei bei der Vorrichtung 1a der Übersichtlichkeit halber auf die Darstellung von Leitungsdurchführungen und Kühlleitungen bzw. Heizleitungen verzichtet wurde. Zur Verstellung der Grundplatte 3 in eine Entnahmeposition, ist diese zudem an hier nicht dargestellten Schienen aus dem Rahmen 18 herausziehbar, so dass eine einfache Zugänglichkeit gewährleistet ist.

Die erfindungsgemäße Vorrichtung bzw. das erfindungsgemäße Verfahren lassen sich auch dazu verwenden, um zuverlässig schwierige Verbundvorgänge zu realisieren. So besteht bspw. die Möglichkeit der Verwendung von Folien mit einer Gitterstruktur oder bedruckter Folien zur zuverlässigen Herstellung von Verbundsicherheitsglas.

## Patentansprüche

1. Vorrichtung zum Herstellen von Verbundsicherheitsglas aus mindestens zwei Glasscheiben mit einer dazwischen angeordneten Klebeschicht, mit
- einer Grundplatte (3) und einer Abdeckplatte (2), die relativ zueinander zwischen einer Betriebsposition und einer Entnahmeposition verstellbar sind,
- einem in der Betriebsposition an der Grundplatte (3) und der Abdeckplatte (2) druckdicht angeordneten Dichtungsrahmen (4),
- Mitteln zum Herstellen eines Unterdrucks in einem zwischen einem die Glasscheiben (10) in der Betriebsposition überdeckenden Hüllmaterial (7) und der Grundplatte (3) gebildeten Hohlraum (12),
- Mitteln zur Erzeugung eines Überdrucks in dem in der Betriebsposition zwischen der Abdeckplatte (2) und dem auf den Glasscheiben (10) angeordneten flexiblen Hüllmaterial (7) gebildeten Arbeitsraum (13) und
- Heizmitteln (6) zum Erhitzen der zu verbindenden Glasscheiben (10),
wobei die Grundplatte (3) und die Abdeckplatte (2) in der Betriebsposition innerhalb eines durch mindestens zwei ringförmige Träger (17) gebildeten Rahmens (18) angeordnet sind.

2. Vorrichtung nach Anspruch 1, **dadurch gekennzeichnet, dass** der Dichtungsrahmen (4) mit der Grundplatte (3) oder der Abdeckplatte (2) lösbar verbunden ist.

3. Vorrichtung nach Anspruch 1 oder 2, **dadurch gekennzeichnet, dass** der Dichtungsrahmen (4) durch einen umlaufend von der Abdeckplatte (2) vorstehenden Steg gebildet ist.

4. Vorrichtung nach einem der vorhergehenden Ansprüche, **dadurch gekennzeichnet, dass** der Dichtungsrahmen (4) Leitungsdurchführungen (14, 15) zum Anschluss von Leitungen (6, 9) einer Vakuum- und/oder Druckeinheit aufweist.

5. Vorrichtung nach einem der vorhergehenden Ansprüche, **dadurch gekennzeichnet, dass** die Grundplatte (3) und die Abdeckplatte (2) in der Betriebsposition verriegelbar sind.

6. Vorrichtung nach einem der vorhergehenden Ansprüche, **dadurch gekennzeichnet, dass** die Heizeinheit durch in der Grundplatte (3) und/oder der Abdeckplatte (2) verlaufenden Rohrleitungen (6) gebildet ist.

7. Vorrichtung nach einem der vorhergehenden Ansprüche, **dadurch gekennzeichnet, dass** außenseitig an der Grundplatte (3) und/oder der Abdeckplatte (2) eine Wärmedämmung (5) angeordnet ist.

8. Vorrichtung nach einem der vorhergehenden Ansprüche, **dadurch gekennzeichnet, dass** die Grundplatte (3) längsverschiebbar und in Richtung auf die Abdeckplatte (2) verstellbar ist.

9. Vorrichtung nach einem der vorhergehenden Ansprüche, **dadurch gekennzeichnet, dass** die Grundplatte (3) mittels pneumatischer Balgzylinder in Richtung auf die Abdeckplatte (2) verstellbar ist.

10. Vorrichtung nach einem der vorhergehenden Ansprüche, **dadurch gekennzeichnet, dass** die ringförmigen Träger (17) einen T-förmigen Querschnitt aufweisen.

11. Verfahren zum Herstellen von Verbundsicherheitsglas aus mindestens zwei Glasscheiben und einer zwischen den Glasscheiben angeordneten Klebeschicht unter Verwendung einer Vorrichtung gemäß einem der Ansprüche 1-10 mit den Schritten
- Anordnen der Glasscheiben (10) mit der dazwischen angeordneten Klebeschicht auf einer Grundplatte (3),
- Überdecken der Glasscheiben (10) mit einem flexiblen Hüllmaterial (7) und Erzeugen eines Unterdrucks in einem Hohlraum (12) zwischen dem Hüllmaterial (7) und der Grundplatte (3),
- Herstellung eines abgedichteten Arbeitsraums (13) zwischen der Abdeckplatte (2) und dem auf den Glasscheiben (10) angeordneten Hüllmaterial (7),
- Erzeugen eines Überdrucks im Arbeitsraum (13) und
- Erhitzen der Glasscheiben (10) mit Klebeschicht und anschließendes Abkühlen.

## Claims

1. A device for producing laminated safety glass from at least two glass panes with an adhesive layer disposed in between, with
- a base plate (3) and a cover plate (2), which can be adjusted relative to each other between an operating position and a removal position,
- a sealing frame (4) disposed in the operating position on the base plate (3) and the cover plate (2) in a pressure tight manner,
- means for creating a vacuum in a hollow space (12) formed between a cladding material (7) covering the glass panes (10) in the operating position and the base plate (3),
- means for creating an overpressure in the working space (13) formed in the operating position between the cover plate (2) and the flexible cladding material (7) disposed on the glass panes (10), and
- heating means (6) for heating the glass panes (10) to be connected,
wherein the base plate (3) and the cover plate (2) are disposed in the operating position within a frame (18) formed by at least two annular carriers (17).

2. The device according to claim 1, **characterized in that** the sealing frame (4) is detachably connected to the base plate (3) or the cover plate (2).

3. The device according to claim 1 or 2, **characterized in that** the sealing frame (4) is formed by an enclosing web projecting from the cover plate (2).

4. The device according to one of the preceding claims, **characterized in that** the sealing frame (4) has line feed-throughs (14, 15) for connecting pipelines (6, 9) of a vacuum unit and/or pressure unit.

5. The device according to one of the preceding claims, **characterized in that** the base plate (3) and the cover plate (2) can be locked in the operating position.

6. The device according to one of the preceding claims, **characterized in that** the heating unit is formed by pipelines (6) running in the base plate (3) and/or the cover plate (2).

7. The device according to one of the preceding claims, **characterized in that** a thermal insulation (5) is disposed on the outside of the base plate (3) and/or the cover plate (2).

8. The device according to one of the preceding claims, **characterized in that** the base plate (3) can be slid longitudinally, and can be adjusted in direction towards the cover plate (2).

9. The device according to one of the preceding claims, **characterized in that** the base plate (3) can be adjusted in direction toward the cover plate (2) by means of pneumatic bellows cylinders.

10. The device according to one of the preceding claims, **characterized in that** the annular carriers (17) have a T-shaped cross-section.

11. A method for producing laminated safety glass from at least two glass panes and an adhesive layer disposed between the glass panes, using a device according to one of the claims 1 - 10 with the steps
- disposing the glass panes (10) with the adhesive layer disposed in between on a based plate (3),
- covering the glass panes (10) with a flexible cladding material (7) and creating a vacuum in a hollow space (12) between the cladding material (7) and the base plate (3),
- creating a sealed working space (13) between the cover plate (2) and the cladding material (7) disposed on the glass panes (10),
- creating an over pressure in the working space (13), and
- heating the glass panes (10) with the adhesive layer, and subsequently cooling.

## Revendications

1. Dispositif pour la fabrication d'un vitrage de sécurité stratifié constitué d'au moins deux vitres avec une couche de colle intercalée, avec
- une plaque de base (3) et une plaque de recouvrement (2) qui peuvent être déplacées l'une par rapport à l'autre entre une position de service et une position de prélèvement,
- un cadre d'étanchéité (4) disposé de façon étanche à la pression dans la position de service sur la plaque de base (3) et la plaque de recouvrement (2),
- des moyens pour réaliser une dépression dans une cavité (12) formée entre un matériau d'enveloppe (7) recouvrant les vitres (10) dans la position de service et la plaque de base (3),
- des moyens pour produire une surpression dans l'espace de travail (13) formé dans la position de service entre la plaque de recouvrement (2) et le matériau d'enveloppe (7) flexible disposé sur les vitres (10), et
- des moyens de chauffage (6) pour chauffer les vitres (10) à réunir,
la plaque de base (3) et la plaque de recouvrement (2) étant, dans la position de service, disposées à l'intérieur d'un cadre (18) formé par au moins deux supports (17) annulaires.

2. Dispositif selon la revendication 1, **caractérisé en ce que** le cadre d'étanchéité (4) est raccordé de façon amovible à la plaque de base (3) ou à la plaque de recouvrement (2).

3. Dispositif selon la revendication 1 ou 2, **caractérisé en ce que** le cadre d'étanchéité (4) est formé par une nervure dépassant de la plaque de recouvrement (2) de façon périphérique.

4. Dispositif selon une des revendications précédentes, **caractérisé en ce que** le cadre d'étanchéité (4) présente des passages de conduite (14, 15) pour le raccordement de conduites (6, 9) d'une unité de mise sous vide et/ou de pression.

5. Dispositif selon une des revendications précédentes, **caractérisé en ce que** la plaque de base (3) et la plaque de recouvrement (2) peuvent être verrouillées dans la position de service.

6. Dispositif selon une des revendications précédentes, **caractérisé en ce que** l'unité de chauffage est formée de conduites tubulaires (6) placées dans la plaque de base (3) et/ou dans la plaque de recouvrement (2).

7. Dispositif selon une des revendications précédentes, **caractérisé en ce que**, côté extérieur, une isolation thermique (5) est disposée sur la plaque de base (3) et/ou la plaque de recouvrement (2).

8. Dispositif selon une des revendications précédentes, **caractérisé en ce que** la plaque de base (3) peut coulisser longitudinalement et peut être déplacée en direction de la plaque de recouvrement (2).

9. Dispositif selon une des revendications précédentes, **caractérisé en ce que** la plaque de base (3) peut être déplacée en direction de la plaque de recouvrement (2) au moyen de vérins à soufflet pneumatiques.

10. Dispositif selon une des revendications précédentes, **caractérisé en ce que** les supports (17) annulaires présentent une section transversale en forme de T.

11. Procédé pour la fabrication d'un vitrage de sécurité stratifié constitué d'au moins deux vitres et d'une couche de colle intercalée entre les vitres, avec utilisation d'un dispositif selon une des revendications 1 - 10, comprenant les étapes suivantes :
- disposition des vitres (10), avec la couche de colle intercalée sur une plaque de base (3),
- recouvrement des vitres (10) avec un matériau d'enveloppe (7) flexible et production d'une dépression dans une cavité (12) entre le matériau d'enveloppe (7) et la plaque de base (3),
- réalisation d'un espace de travail (13) rendu étanche entre la plaque de recouvrement (2) et le matériau d'enveloppe (7) disposé sur les vitres (10),
- production d'une surpression dans l'espace de travail (13) et
- chauffage des vitres (10) avec la couche de colle, suivi d'un refroidissement.
